# EUROPÄISCHE PATENTANMELDUNG

(11) **EP 4 335 622 A1**
(43) Veröffentlichungstag der Anmeldung: **13.03.2024**
(21) Anmeldenummer: 23194512.2
(22) Anmeldetag: 31.08.2023
(51) Int. Cl.: B29C 49/78, B29C 49/80

(54) **VERFAHREN UND VORRICHTUNG ZUM BEHANDELN VON BEHÄLTNISSEN MIT IDENTIFIKATION AUSGELEITETER BEHÄLTNISSE**

(30) Priorität: 08.09.2022 DE 102022122882
(71) Anmelder: Krones AG, 93073 Neutraubling (DE)
(72) Erfinder: Steiner, Andreas, 93073 Neutraubling (DE); Szwarc, Robert, 93073 Neutraubling (DE); Boettcher, Benedikt, 93073 Neutraubling (DE); Senn, Konrad, 93073 Neutraubling (DE); Olenberg, Philipp, 93073 Neutraubling (DE); Zoelfl, Markus, 93073 Neutraubling (DE)
(74) Vertreter: Bittner, Bernhard

(57) **Zusammenfassung**

Verfahren zum Behandeln von Behältnissen, wobei die Behältnisse mittels einer Transporteinrichtung (2) entlang eines vorgegebenen Transportpfads transportiert werden und von einer ersten Behandlungseinrichtung in einer vorgegebenen Weise behandelt werden, wobei zu der Behandlung des Behältnisses vorgegebene Arbeitsparameter (P1, P2, P3) verwendet werden, wobei einzelne Behältnisse nach ihrer Behandlung inspiziert werden und wenigstens eine für eine Qualität dieser Behältnisses charakteristische Größe bestimmt wird, dadurch gekennzeichnet, dass wenigstens eine Identifikationsinformation erzeugt wird, mittels derer ein inspiziertes Behältnis und/oder ein Inspektionsvorgang eindeutig identifizierbar ist.

## Beschreibung

Die vorliegende Erfindung betrifft eine Vorrichtung und ein Verfahren zum Behandeln von Behältnissen. Die vorliegende Erfindung wird unter Bezugnahme auf eine Umformungseinrichtung zum Umformen von Kunststoffvorformlingen zu Kunststoffbehältnissen beschrieben, welche auch eine sehr besonders geeignete Anwendung für die vorliegende Erfindung darstellt, da diese Maschinengattung eine Vielzahl von Regelungsmöglichkeiten aufweist. Es wird jedoch darauf hingewiesen, dass die vorliegende Erfindung auch bei anderen Verfahren und anderen Anlagentypen verwendbar ist.

In der getränkeherstellenden Industrie ist es bekannt, dass Getränkebehältnisse mit einer Vielzahl von Anlagenteilen gefertigt werden. So werden beispielsweise zunächst Kunststoffvorformlinge erwärmt und anschließend mittels einer Blasformmaschine wie etwa einer Streckblasmaschine zu Kunststoffflaschen expandiert. Anschließend können derartige Flaschen beispielsweise bedruckt oder etikettiert, befüllt und verschlossen werden.

Im Laufe der Zeit sind derartige Vorrichtungen stets komplizierter in ihren Aufbauten und Verfahren geworden. So ist es beispielsweise bei einer Blasformmaschine bekannt, dass die Kunststoffvorformlinge mit mehreren Druckniveaus beaufschlagt werden, um expandiert zu werden. Daneben wird üblicherweise auch eine Reckstange verwendet, welche die Behältnisse in ihrer Längsrichtung dient. Aus diesem Grunde weisen daher derartige Maschinen eine Vielzahl von Arbeitsparametern auf, die verändert werden können, wie beispielsweise die Größe der einzelnen Drücke, die Zeitpunkte und Zeiträume, in welchen diese auf das Behältnis angewandt werden, die Bewegung der Reckstange und dergleichen. Bei Getränkebehältnissen gibt es verschiedene Qualitätskriterien die eingehalten werden sollten. Hierzu werden im Stand der Technik meist Labormessungen getätigt wie Sektionsgewichtermittlung oder Burstpressurermittlung. Dies sind zerstörende Messmethoden bei denen die Behältnisse zerstört werden. Daher eigen sie sich nicht als Inlinemessung. Andere Messung wie Topload oder Stresscrack sind wiederum technologisch so aufwendig das sie ebenfalls inline nicht durchführbar sind.

Diese Messungen sind aber häufig sehr wichtig für die Performanz der Behältnisse daher werden sie nicht nur zur Qualitätskontrolle, sondern auch bei der Prozessoptimierung verwendet

Es ist daher aus dem Stand der Technik bekannt, dass gefertigte Behältnisse beispielsweise stichprobenartig aus dem Fertigungslauf entfernt werden und untersucht werden. Anschließend kann der Benutzer die Arbeitsparameter in einer Weise einstellen, dass sich ein für ihn gewünschtes Sollbehältnis ergibt.

Aktuell werden daher Serviceausleitungen für Qualitätssicherungsmessungen an der Maschine verwendet. Dabei werden jedoch derartige Messungen ohne eine Zuordnung zu der eigentlichen Behältnisproduktion durchgeführt. Nur wenn man einen aktuellen sekundengenauen Ausleitzeitpunkt kennt, lässt sich in den Maschinendaten die Ausleitung der Behältnisse genau identifizieren und gegebenenfalls können weitere Informationen zu diesen Behältnissen herausgelesen werden. Dies ist jedoch ein relativ aufwendiger Vorgang.

Um Informationen wie aktuell zugehörige Prozessparameter bzw. Arbeitsparameter und zugehörige Onlinemessdaten zu diesen Behältnissen (beispielsweise ein Wanddickenprofil) zuverlässig zu sichern, mussten in dem betreffenden Zeitpunkt stets händisch die Rezeptparameter gesichert werden und die zugehörigen Wanddicken aktiv gespeichert und/oder notiert werden.

So kann es beispielsweise vorkommen, dass ein Maschinenbediener über einen gewissen Zeitraum hinweg eine Vielzahl von Behältnissen entnimmt, und zunächst befriedigende aber für Ihn noch nicht ausreichende Ergebnisse erzielt. In einem weiteren Verlauf der Messungen zeigt sich, dass die erstgenannten Ergebnisse tatsächlich die besten erreichbaren waren. In diesem Fall lässt sich für den Maschinenbediener nur schwer konstruieren, welche diejenigen (Arbeits)Parameter oder Umgebungsbedingungen waren, mit denen das erstgenannte Behältnis erzeugt wurde.

Der vorliegenden Erfindung liegt daher die Aufgabe zugrunde, für derartige Anlagen und Verfahren eine Möglichkeit zur Verfügung zu stellen, mit welcher der Benutzer stets auf die von ihm gewünschten Ergebnisse bzw. Arbeitsparameter zugreifen kann. Daneben soll eine Möglichkeit geschaffen werden, um derartige Maschinen besser zu optimieren.

Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Behandeln von Behältnissen werden die Behältnisse mittels einer Transporteinrichtung entlang eines vorgegebenen Transportpfads transportiert und von einer ersten Behandlungseinrichtung in einer vorgegebenen Weise behandelt, wobei zu der Behandlung der Behältnisse vorgegebene Arbeitsparameter verwendet werden. Dabei werden einzelne Behältnisse nach ihrer Behandlung inspiziert und wenigstens eine für eine Performance dieser Behältnisse charakteristische Größe wird bestimmt.

Erfindungsgemäß werden mittels einer Identifikationsinformation das Behältnis und die für eine Performance dieser Behältnisse charakteristische Größe eindeutig identifiziert und miteinander in Verbindung gebracht. Bevorzugt wird dabei eine Identifikationsinformation erzeugt, mittels derer ein inspiziertes oder zu inspizierendes Behältnis und/oder eine für dieses Behältnis charakteristische Eigenschaft und/oder ein Inspektionsvorgang eindeutig identifizierbar ist.

Unter einer Identifizierbarkeit des Behältnisses oder eines Identifikationsvorganges wird dabei insbesondere verstanden, dass insbesondere auch Daten identifizierbar und/oder rekonstruierbar sind, welche für dieses Behältnis charakteristisch sind, wie insbesondere die Arbeitsparameter, mit welchen dieses Behältnis behandelt wurde. Dabei ist es auch möglich, dass nicht das Behältnis selbst identifiziert wird sondern für dieses charakteristische Daten, etwa ein Zeitpunkt zu dem dieses Behältnis etwa ausgeleitet wurde. Es ist dabei denkbar, dass das Behältnis selbst (etwa infolge einer invasiven oder destruktiven Inspektion) nicht mehr vorhanden ist

Dabei ist es insbesondere möglich, dass beispielsweise ein Zeitpunkt identifizierbar ist, zu dem dieses Behältnis aus einem Transportpfad ausgeschleust wurde.

Durch diese eindeutige Identifizierbarkeit ist auch ermittelbar, mit welchen Arbeitsparametern dieses Behältnis behandelt wurde und/oder welche bestimmten Messwerte bei der Behandlung dieses Behältnisses wie beispielsweise Druckwerte aufgetreten sind.

Bei der Behandlung von Behältnissen werden beispielsweise bestimmte Rezepte verwendet, wie oben erwähnt, bestimmte Blasdrücke. Entsprechend existieren auch entsprechende Rezeptparameter, die oben auch als Arbeitsparameter bezeichnet wurden.

Bevorzugt werden die Rezeptparameter und die Onlinemesswerte wie beispielsweise Wanddicken Messwerte abgespeichert und bevorzugt kontinuierlich abgespeichert.

Eine Idee der Erfindung besteht nun darin dass in einem ersten Schritt Produktionsdaten eines Behältnisses mit seinen Performancedaten in Verbindung gebracht werden können. Bevorzugt existieren dabei vier verschiedene Daten in zwei Klassen, wobei in der ersten Klasse die Produktionsdaten (in Produktion erhebbar für jedes Behältnis) eingeordnet sind und in der zweiten Klasse die Performancedaten (nur Offline bzw. nur für ausgewählte Behälter). Die Produktionsdaten werden dabei bevorzugt in Arbeitsparameter ((einstellbar) Werte, welche Bediener und Maschine ändern können, wie beispielsweise Druck, Geschwindigkeit, Momente Schaltzeitpunkte, etc.), Störgrößen oder Umgebungsdaten ((nicht beinflussbar) beispielsweise Preformqualität, Hallentemperatur, etc.) und Messdaten ((real time) Messdaten die für alle Behälter und (nahezu) in Echtzeit erhoben werden können, wie beispielsweise Istdrücke, Ist Temperaturen, Wandstärken, Inspektionsfotos, etc.) eingeteilt. Die Performancedaten sind bevorzugt Messdaten die nicht oder nur Sehr schwer inline und in Echtzeit aufgenommen werden können, wie beispielsweise Topload , Burstpressure, Aufdrehmoment, etc.

In einem zweiten Schritt, der unten genauer beschrieben wird, wird bevorzugt ein Modell entwickelt, welches einen Zusammenhang aus charakteristischen Produktionsdaten und Performancedaten abbilden kann.

In einem weiteren Schritt kann die Vorrichtung, bevorzugt basierend auf diesem Modell anhand weiterer Produktionsdaten und bevorzugt in Echtzeit die Behältnisperformance, insbesondere auch während der Produktion und/oder in Produktionspausen automatisch und/oder teilautomatisiert optimieren.

Bei den Arbeitsparametern, auch als Produktionsdaten bezeichnet oder auch den charakteristischen Werten, kann es sich, je nach Behandlungseinrichtung um unterschiedlichste Werte handeln.

Bevorzugt sind diese charakteristischen Werte aus einer Gruppe von Werten ausgewählt, welche durch einfache inline Messungen ermittelbar sind wie z.B. eine Preformtemperatur, ein Blasdruck, eine Füllhöhe, ein Verschließermoment oder eine Wandstärke der gefertigten Behältnisse.

Daneben kann es sich um solche Daten handeln, welche beispielsweise mit einer optischen Inspektion ermittelbar sind, wie insbesondere auftretende Fehler. So können beispielsweise Neckabrisse oder Bodenlinsen inspiziert und/oder ausgewertet werden. Zu diesem Zweck können statistische Bildverarbeitungsmethoden, insbesondere zu einer Vorverarbeitung von Bildern angewandte werden.

Daneben kann es sich bei den Arbeitsparametern auch um Maschinendaten wie eine Transportgeschwindigkeit der Behältnisse, einen Reckzeitpunkt, ein Druckniveau bei Vor,-Zwischen- oder Fertigblasen, eine Ventilschaltzeit beim Vor-, Zwischen oder fertigblasen, ein Verschließermoment, eine Etikettenspannung, ein Start oder Stoppzeitpunkt des Füllvorgangs, ein Volumenstrom während des Füllvorgangs oder eine Füllmenge handeln.

Daneben können auch Umgebungsdaten wie eine Temperatur oder eine Luftfeuchtigkeit oder ein Luftdruck aufgenommen werden.

Daneben können auch Daten der Packmittel wie ein IR Absorbtionskoeffizient, ein Preform-Gewicht, eine Preformwandstärke, eine Materialinformation, eine Chargennummer, eine Etikettenart oder eine Verschlussfarbe aufgenommen werden

Weiterhin kann es sich bei den Messwerten oder Messdaten auch um für eine Performance des Behältnisses charakteristische Werte handeln, wie etwa ein Topload, eine Pinchaufweitung, ein Berstdruck, ein Druck-, Dehnungskurven eine Bruchbelastbarkeit (Stresscrack), oder ein Wiederaufdrehmoment.

Die Erfindung befasst sich nun mit der Zuordnung dieser genannten Datensätze (welche jedoch insbesondere das gleiche Behältnis betreffen). Diese könnte auch über ein lückenloses Tracking erfolgen. Dies hat jedoch Grenzen wenn z.B. händisch in den Behälterstrom eingegriffen wird, z.B. zur Probenentnahme. Wenn ein händischer Eingriff notwendig ist, werden bevorzugt die Behältnisse maschinenseitig markiert, insbesondere beschriftet und/oder nummeriert und/oder gekennzeichnet. Besonders bevorzugt ist diese Markierung maschinenlesbar, insbesondere zur Ermittlung der Performancedaten.

Im aktuellen Stand der Technik werden dabei bei der Produktion von PET-Flaschen verschiedenste Messungen zur Qualitätsprüfung von Flaschen herangezogen. Der Bediener/Kunde untersucht hierbei bevorzugt bewusst ausgeleitete Flaschen (Reject) oder entnimmt Flaschen aus dem Flaschenstrom nach der Maschine/Bloc-Anlage und nimmt Messungen (Offline) an den Flaschen vor. Zusätzlich weist die Vorrichtung selbst bevorzugt Inline-Messeinrichtungen auf, welche dazu geeignet und bestimmt sind jeden Behälter in der Vorrichtung zu inspizieren bzw. mit denen jeder Behälter inspiziert werden kann. Bevorzugt werden demnach inline und/oder offline Messungen an Behältern vorgenommen. Die Inline-Messungen bzw. die Ergebnisse und/oder Messwerte der Inline-Messungen werden so dokumentiert, dass die Behältercharakteristik mit der behandelnden Station in Verbindung gebracht wird, und ein Datensatz an der Datenschnittstelle zur weiteren Verarbeitung sowie auch zur stationsweisen Analyse bereitsteht.

Bis zum jetzigen Zeitpunkt gab es dabei keine Möglichkeit die Inline- und Online-Messungen (Ergebnisse) miteinander zu verknüpfen. Es gäbe beispielsweise die Möglichkeit, eine laufende Nummer auf der Flasche mit einem Codiergerät aufzubringen, mit der ein Rückbezug zur Inline gemessenen Flasche ermöglicht werden könnte. Jedoch ist ein derartiger permanent und flaschenweise neu aufzubringender Code (laufende Nummer) nur bei niedrigen Leistungen durch das Codiergerät möglich. Bei hohen Leistungen kann keine laufende Nummer generiert werden, so dass eine Nachverfolgung über eine laufende Nummer nicht möglich ist.

Bevorzugt wird daher vorgeschlagen, dass der Datensatz mit den Inline-Messungen in einer Datenstruktur bereitgestellt wird, in der ein Rundenzähler des Blasrads und jeder Messwert innerhalb dieser Runde je (Umformungs-) Station und zugeordnet zur jeweiligen Station an der Datenschnittstelle bereitgestellt wird. In anderen Worten sind pro Umdrehung des Blasrads alle Werte einer Messung je (Umformungs-) Station inklusive Rundenzählerwert in einer Datenstruktur vorhanden.

Dabei wird bevorzugt bei jeder Umdrehung der Blasmaschinen der Inhalt dieser Datenstruktur mit den neuen Messwerten und dem neuen Rundenzählerstand an der Datenschnittstelle angezeigt. Dieser Rundenzähler wird dabei bevorzugt per Codierung auf das Behältnis aufgebracht. Da die Frequenz pro Runde niedriger ist als die Frequenz pro Behältnis, ergibt sich die Möglichkeit, dass es rechentechnisch möglich ist innerhalb einer Runde einen neuen Code zum Aufbringen durch einen Laser oder ähnliches zu kompilieren.

Das Endergebnis ist somit ein Behältnis, welches mit der Codierung der Rundennummer und dem Embosing der Stationsnummer am Behälterboden eine eindeutige Zuordnung zu den Inline-Messdaten ermöglicht. Es ist demnach eine Zuordnung und Korrelation aller vorhandenen Maschineneinstellparameter möglich, so dass zu den Offline-Messdaten auch (Inline-) Maschinenparameter zugeordnet werden können.

Bei dieser Vorgehensweise ergibt sich demnach bei der Probenentnahme einer Flasche die Möglichkeit der Korrelation von Offline-Messungen mit Inline-Messungen, die Möglichkeit der Zuordnung nach Behandlungs- bzw. Umformungsstationen und die Möglichkeit der Zuordnung nach Maschinenparametern.

Bei einem weiteren bevorzugten Verfahren vermisst ein "automatisches inline Labor" die Behältnisse bzw. Stichproben vermisst. So können bevorzugt gezielt Behältnisse mit einer Handlingseinheit dem Behälterstrom entnommen werden und dann parallel zur Produktion vermessen werden und bevorzugt dem Behältnisstrom wieder zugeführt werden.

Es kann von Vorteil sein das die Daten und/oder Messwerte nicht einem Behälter, sondern einer Gruppe von Behältern zugeordnet werden. Dies kann zum eine das statistische Rauschen unterdrücken oder einzelne Messungenauigkeiten ausnivellieren. Zum anderen kann es teilweise technisch einfacher umsetzbar sein, ganze Gruppen von Behältern zu nutzen Bei einem bevorzugten Verfahren werden daher Gruppen von Behältnissen inspiziert.

Besonders bevorzugt, handelt es sich bei den Behältnissen um Glas- oder Kunststoffbehältnisse. Bei einem weiteren bevorzugten Verfahren handelt es sich bei den Behältnissen um noch unverschlossene Behältnisse.

Dabei ist es möglich, dass die Inspektion sowohl außerhalb der Maschine oder innerhalb der Maschine durchgeführt wird. Es ist daher möglich, dass die Behältnisse zum Zwecke der Inspektion ausgeleitet werden, oder aber, dass sie online inspiziert werden. Weiterhin kann die Inspektion invasiv oder destruktive sein, d. h. das Behältnis wird in seiner physikalischen Eigenschaft verändert und/oder dabei teilweise oder ganz zerstört..

Bevorzugt transportiert die Transporteinrichtung die Behältnisse vereinzelt. Bevorzugt sind, gezielt Behältnisse aus dem Transportpfad nach der Behandlungsvorrichtung ausleitbar. Bei einem weiteren bevorzugten Verfahren werden die Behältnisse nach der ersten Behandlungseinrichtung noch mittels einer zweiten Behandlungseinrichtung behandelt und insbesondere in einer anderen Weise wie mit der ersten Behandlungseinrichtung. Damit ist die hier beschriebene Inspektion bevorzugt keine Endkontrolle eines gefüllten und verschlossenen Behältnisses, sondern insbesondere eine Inspektion eines Halbfabrikats wie beispielsweise eines noch leeren geblasenen Kunststoffbehältnisses.

Bei einem bevorzugten Verfahren werden dem inspizierten Behältnis und/oder der für die Performance des Behältnisses charakteristischen Größe, insbesondere mittels der Identifikationsinformation, die Arbeitsparameter zugeordnet, mit denen dieses Behältnis behandelt wurde.

Bei einem bevorzugten Verfahren werden dem inspizierten Behältnis und/oder der für die Performance charakteristischen Größe insbesondere mittels der Identifikationsinformation die Umgebungsdaten und/oder Messdaten zugeordnet, mittels denen dieses Behältnis behandelt wurde.

Bevorzugt werden sowohl Messergebnisse die Inline gewonnen werden also auch Messergebnisse, die nicht inline gemessen wurden, welche aber insbesondere auf den gleichen Arbeitsparametern beruhen, einander zugeordnet.

Bevorzugt weist die Behandlungseinrichtung eine Vielzahl von insbesondere gleichartigen Behandlungsstationen auf, welche an den Behältnissen gleichartige Behandlungsvorgänge durchführen. So kann es sich beispielsweise um eine Umformungseinrichtung handeln, welche eine Vielzahl von Umformungsstationen aufweist, welche jeweils Kunststoffvorformlinge zu Kunststoffbehältnissen umformen.

Besonders bevorzugt wird dem inspizierten Behältnis, insbesondere mittels der Identifikationsinformation auch die Behandlungseinrichtung zugeordnet, welche dieses Behältnis behandelt hat.

Bevorzugt werden die zu inspizierenden Behältnisse aus einem Transportpfad der Behältnisse stromabwärts der Behandlungseinrichtung ausgeschleust. In diesem Fall werden Offline-messungen vorgenommen. Es wären jedoch auch die Durchführung von Onlinemessungen, d. h. während des Transports der Behältnisse denkbar.

Bei einem weiteren bevorzugten Verfahren wird ein Zeitpunkt erfasst, zu welchen ein bestimmtes Behältnis inspiziert wurde und/oder aus einem Transportpfad ausgeleitet wurde. Dieser Zeitpunkt ist im einfachsten Fall die oben genannte Identifikationsinformation. Besonders bevorzugt erhält bzw. enthält jedoch die Identifikationsinformation einen Zeitstempel bzw. eine exakt definierbare Zeit.

Da, wie oben erwähnt, Rezeptparameter bzw. Arbeitsparameter und auch Onlinemesswerte wie etwa die Wanddicken kontinuierlich gespeichert werden, lassen sich mit der exakten Zeitzuordnung genau diese Werte bei Bedarf beispielsweise aus einer Datenbank rekonstruieren.

Bevorzugt wird der exakte Zeitstempel über eine Identifikation wie insbesondere eine kurze "Ausleit-ID" in einfacher Weise erfasst und kann so den zu inspizierenden Behältnissen, insbesondere den ausgeleiteten Musterflaschen zugeordnet werden.

Alle nachfolgenden Protokolle über Messungen an diesen Behältnissen werden bevorzugt mit dieser oben genannten Ausleit-ID bzw. mit der Identifikationsinformation erfasst und/oder dokumentiert. Später (bei beispielsweise erfolgreichen Bewertungen der Behältnisqualität) können reversiv Rezeptparameter und auch Messwerte (zum Beispiel als Sollwert) für einen Regelkreis aus der Datenbank bzw. der DMM (Daten Management Maschine) wiederhergestellt werden.

Auf diese Weise wird durch die Erfindung eine hohe Zeitersparnis erreicht und auch eine höhere Sicherheit gegen einen unbeabsichtigten Verlust von "Zwischenstandsdaten". Weiterhin kann Dokumentationsarbeit bei der Prozessfindung oder Validierung von Flaschen wie beispielsweise PET-Flaschen entfallen. Weiterhin wird auch ein Genauigkeitsgewinn erzielt.

Daneben kann auch eine exakte Übereinstimmung von Onlinemessdaten (späteren Solldaten für die Regelung) mit für gut befundenen Offlinemessdaten hergestellt werden. Auf diese Weise ergibt sich eine hohe Genauigkeit bei der späteren Regelzielvorgabe.

Damit besteht die Erfindung auch darin, insbesondere ausgeschleusten oder auszuschleusenden Testmaterial wie beispielsweise Testbehältnissen eine Identifikation beispielsweise eine Ausleit-ID mitgeben zu können, mit der im Nachgang, insbesondere anhand eines zugehörigen Zeitstempels alle relevanten, diesem Ausleitzeitpunkt zugeordneten Datenpunkte, insbesondere aus entsprechenden Digitalisierungsdatenbanken (Sitepilot, LD, LMS) für allerlei Anwendungsfälle bei Bedarf genutzt werden können.

Insbesondere enthält daher die Identifikationsinformation einen exakten Zeitpunkt eines Ausleitvorgangs. Besonders bevorzugt wird ein Zeitpunkt in einem Format "Tag-Stunde-Minute und Sekunde", gegebenenfalls noch feiner ausgegeben. Aus der Maschinendatenbank kann auf diese Weise sowohl eine Behandlungseinrichtung bzw. Behandlungsstation, welche dieses Behältnis behandelt hat, als auch die zu diesem Zeitpunkt gültigen Arbeitsparameter als auch gegebenenfalls für dieses Behältnis aufgetretene Messwerte erfassen.

Besonders bevorzugt werden auch bei der Behandlung des Behältnisses Messwerte aufgenommen, die für diese Behandlung charakteristisch sind. Bei diesen Messwerten kann es sich beispielsweise um gemessene Druckwerte handeln, um gemessene Durchflusswerte, um Temperaturen und dergleichen. Auch diese Messwerte werden bevorzugt mit erfasst.

Bei einem weiteren vorteilhaften Verfahren wird eine Vielzahl von Behältnissen inspiziert und bevorzugt aus den bei diesen Inspektionen ermittelten Messwerten ein Modell zur Steuerung der Behandlungseinrichtung abgeleitet.

Bevorzugt wird nun von einer möglichst großen Zahl an Behältnissen und einer breiten Varianz an Produktionsdaten und Performancedaten und/oder Messwerte alle verfügbaren Daten zusammengebracht und/oder einander zugeordnet und bevorzugt daraus ein Modell gebildet.

Zur Modellbildung können verschiedene Möglichkeiten in Betracht gezogen werden. So können beispielsweise klassische Korrelationsanalysen oder Dimensionsanalysen vorgenommen werden. Auch können mit Hilfe mathematischer Fitfunktionen Zusammenhänge modeliert werden.

Es kann weiterhin unter Hinzuziehen eines Experten ein Modell erzeugt werden. Ebenfalls denkbar sind verschiedene Methoden der KI, wie ein Neuronales Netzwerk eine Reinforcement Learning oder eine Physical Based KI welche ein Modell erzeugen.

Bevorzugt erfolgt die Ermittlung von Arbeitsparametern mit einem (künstlichen) neuronalen Netzwerk und insbesondere auf, auf wenigstens einem, und insbesondere genau einem, (künstlichen) neuronalen Netzwerk basierenden (computer-implementierten) Verfahren des maschinellen Lernens. Bevorzugt basiert das Simulations-Behältnisinspektions-Modell maschinellen Lernens auf einem (künstlichen) neuronalen Netzwerk.

Die Daten die in das Model fließen können während Standard Produktion erzeugt werden oder in speziellen Produktionsläufen in denen gezielt bestimmte Parameter Variiert werden. Es ist auch denkbar beide Verfahren zu kombinieren und in einem "Teachinglauf" ein Basisset an Daten für ein Basismodell zu erzeugen und dann in laufender Produktion nach und nach daten in das System einzuspeisen und gegeben falls das Modell nachzuschärfen

Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Modell bzw. dem (künstlichen) neuronalen Netzwerk die (zu verarbeitenden) Daten, insbesondere die Sensordaten (oder hiervon abgeleitete Daten), als Eingangsgrößen zugeführt. Bevorzugt bildet das Modell bzw. das künstliche neuronale Netzwerk die Eingangsgrößen in Abhängigkeit einer parametrierbaren Verarbeitungskette auf Ausgangsgrößen ab, wobei als Ausgangsgröße bevorzugt die Messgrößen und bevorzugt als Ausgangsgrößen eine Vielzahl von Messgrößen gewählt sind.

Bevorzugt gleicht nun, insbesondere auf Basis des vorhandenen Modells gleicht nun während dem Produktionslauf (oder in kurzen Pausen) die Anlage die Performance der Behältnisse an die Sollperformance an.

Hierzu versucht bevorzugt die Behandlungseinrichtung die beinflussbaren Produktionsdaten so einzustellen das die erwünschte Performance erreicht wird.

Bei Produktionsdaten wird bevorzugt zwischen drei verschieden Datenarten und/oder Parameterarten unterschieden, nämlich einerseits zwischen direkt beeinflussbaren Daten oder Parametern (z.B. Maschinengeschwindigkeit oder Fülldruck), indirekt beeinflussbaren Parametern (Wandstärkenverteilung, Preformtemperatur am Ofenauslauf oder Füllhöhe) und nicht beeinflussbaren Werten (Luftfeuchtigkeit, IR-Absorbtionsverhalten oder Hallentemperatur).

Um die gewünschte Sollperformance zu erreichen kann es sein das Verschieden kaskadierte Modelle genutzt werden. So ist es denkbar das es z.B. ein Modell gibt welches eine indirekt beinflussbare Größe (z.B. Wandstärkenverteilung) über Anpassung von Direktbeeinflussbaren werten (z.B. Heizungsteller oder Reckgeschwindigkeit) derart anpasst das die im Hauptmodel hinterlegte Wandstärke zur aktuellen Hallentemperatur erzeugt wird um die Sollperformance zu erreichen.

Ein weiterer Punkt der bevorzugt in das Modell einfließen kann, sind Nebenbedingungen wie z.B. Energiebedarf oder Abfülldruck. Es kann z.B. versucht werden der Sollperformance so nahe wie möglich zu kommen bei minimalem Energiebedarf.

Es ist auch denkbar, dass das Modell nach und nach geschärft wird, indem immer wieder Performancedaten erhoben werden und mit den Modellprognosedaten abgeglichen werden.

Die vorliegende Erfindung wird nunmehr an einem konkreten Beispiel nämlich einer Blasformmaschine erläutert. Derartige Blasformmaschinen weisen einen drehbaren Transportträger auf, an dem eine Vielzahl von Umformungsstationen angeordnet ist, welche Kunststoffvorformlinge zu Kunststoffbehältnissen umformen. Weiterhin weisen diese Maschinen bevorzugt auch Reckeinheiten auf, welche die Kunststoffvorformlinge in ihrer Längsrichtung dehnen. Bevorzugt weisen diese Maschinen auch Prozessregelungen auf, die insbesondere individuell für jede Umformungsstation die Umformungsprozesse regeln.

Bereits bei der Prozessfindung bzw. Validierung der Behältnisqualität werden bevorzugt mehrere Musterflaschen ausgeleitet und im Nachgang Onlinequalitätstests oder auch insbesondere Offlinequalitätstests unterzogen. Dabei werden bevorzugt Optimierungsschleifen gefahren und bevorzugt iterativ so lange Optimierungsschleifen gefahren, bis die Qualitätstests für gut befunden werden.

Stellt sich heraus, dass das beste Ergebnis bereits in den Anfängen dieser Optimierungsschleife gefunden wurde und im Nachgang trotz längerer Bemühungen keine weitere Verbesserung mehr gefunden werden konnte, würden gegebenenfalls auch diese ersten Ergebnisse als Kompromiss akzeptiert werden.

In diesem Fall kann im Stand der Technik das Problem auftreten, dass die zugehörigen Einstellparameter und gegebenenfalls Onlinemesswerte wie beispielsweise Wanddicken Messwerte, Bodeninspektionswerte und dergleichen zu diesem "besten Ergebnis" nicht mehr bekannt sind oder nicht gespeichert wurden.

Ist aber, wie es von der Erfindung vorgeschlagen, zu diesem besten Ergebnis eine Ausleit-ID mit notiert worden, insbesondere die oben genannte Identifikationsinformation, lassen sich sowohl die Einstellparameter der Maschine als auch ein entsprechendes Regelziel (die Onlinequalitätskriterien) wie Wanddickenverlauf, Bodeninformationen und dergleichen wiederherstellen. Dies kann beispielsweise durch eine Eingabe der Identifikationsinformation an einer Maschine erfolgen, wobei hierzu insbesondere Digitalisierungsdatenbanken genutzt werden können.

Ein weiteres Abspeichern von Prozessdaten ist nicht mehr zwingend erforderlich. Auf diese Weise können für eine Maschine wichtige Parameter wie beispielsweise die Basic-setpoint-Einstellparameter der Maschine oder eine Zieldefinition der Regelung, wie etwa ein Wanddickenverlauf in deutlich einfacher Weise zurückgespielt werden bzw. wieder aufgefunden werden.

Im Folgenden werden unter Offlinemessungen solche Messungen an Behältnissen verstanden, die außerhalb einer Herstellungsanlage vorgenommen werden und die letztlich nachweisen sollen, ob das Behältnis den geforderten Qualitätsansprüchen entspricht. Zu diesen Messungen zählen beispielsweise Messungen der Sektionsgewichte, das Shelflife, Thermotests und dergleichen. Mit Shelflife ist dabei bevorzugt die Haltbarkeit eines Produkts gemeint, z.B. wie lange hält ein Getränk die erforderliche Menge an CO2 bei vorgegebener Temperatur.

Unter Onlinemessungen werden Messungen verstanden, die während der Produktion und insbesondere ohne eine Ausleitung von Behältnissen vorgenommen werden können (wie beispielsweise Wanddickenmessungen, optische Messverfahren zur Ausformung und Verstreckung und dergleichen.

Korrelieren diese Messungen ausreichend gut mit den eigentlichen Qualitätsansprüchen, können Offlinemessungen reduziert werden oder völlig entfallen.

Bevorzugt werden jedoch, wie oben erwähnt auch Offlinemessungen und Onlinemessungen, welche an dem gleichen Behältnis oder der gleichen Gruppe an Behältnissen durchgeführt wurden, einander zugeordnet.

Bei einem weiteren bevorzugten Verfahren werden sowohl Offlinemessungen vorgenommen, d. h. Messungen, bei denen die Behältnisse ausgeleitet werden, als auch Onlinemessungen, die im Produktionsbetrieb durchgeführt werden. Bevorzugt können Identifikationsinformationen sowohl für diese Offlinemessungen als auch für Onlinemessungen vorgegeben bzw. ausgegeben werden.

Die Identifikationsinformation (auch als Ausleit-ID bezeichnet) verhindert, dass gute Einstellungen verloren gehen können und Prozessarbeit mehrfach gemacht werden muss. Da die Offline - Qualitätsmessungen oft parallel zur Behältnisoptimierung ablaufen, kann es leicht passieren, dass gute Zwischenstände einfach wieder verloren gehen, da die zugehörigen Einstellparameter nicht rückgespeichert wurden. In schwierigen Fällen kann es sein, dass wegen kleinerer Ausfälle der Kunde zunächst auf einer weiteren Optimierung besteht, letztlich dann aber doch der zuvor abgelehnte Zwischenstand akzeptiert wird.

Eine Forderung einer gleichbleibenden Qualität für alle Behältnisse ist im Nachgang in der Regel kaum zu erfüllen, da einerseits die zugehörigen Gegebenheiten nicht mehr rekonstruierbar sind und andererseits die Informationen teilweise nur noch in Form von Messdaten vorliegen, da die Messmethoden nicht zerstörungsfrei waren.

Wenn aber den Behältnissen, wie im Rahmen der Erfindung vorgeschlagen wird, eine Ausleit-ID bzw. die Identifikationsinformation zugeordnet wird, lassen sich allein über diese Information, insbesondere in Verbindung mit einem zugehörigen Zeitstempel die kompletten Einstellparameter der Umformungsvorrichtung, sowie auch die zugehörigen Onlinemessdaten zu diesen Behältnissen aus der Datenbank wieder in die Maschine und in die Messeinheit übertragen.

Unter einem Regelziel werden im Folgenden die online Messergebnisse wie beispielsweise Wanddicken bezeichnet, die bevorzugt im Regelsystem als Sollwerte hinterlegt werden. Prozessangaben, die von der Regelung vorgenommen werden, zielen darauf ab, dieses Regelziel möglichst gut zu erreichen.

Die Informationsinformation bzw. die Ausleit-ID schafft die Möglichkeit, das Onlineregelziel exakt mit den "besten Offlinemessdaten" zu matchen. Aktuell werden die Sollwerte der Onlinemessdaten während der Einlernphase (DoE (statistische Versuchsplanung)) von dem Messsystem erfasst und schließlich dem Regelungssystem übergeben.

Dies sind bevorzugt nicht identisch diejenigen Werte, die im Validierungsprozess erreicht wurden, sondern "nur" diejenigen Onlinemesswerte, die sich bei der Wiederholung der besten Einstellparameter (Bestsetpoint-Einstellungen) aus dem Validierungsprozess nun in der Einlernphase (DoE) ergeben.

Da die auszuregelnden Störeinflüsse auch bei identischen Einstellparametern für eine Verschlechterung der Behältnisqualität sorgen können, besteht die Gefahr, dass bei der Einlernphase eben nicht die bestmögliche Wanddickenverteilung aus dem Validierungsprozess, sondern gegebenenfalls ein ungünstigeres Wanddickenprofil als Regelziel hinterlegt wird. Das Regelziel wäre somit schlechter als von einem Kunden gewünscht.

Falls man zu den ausgeleiteten Testbehältnissen im Validierungsprozess jedoch die jeweilige Identifikationsinformation zur Verfügung hat, lassen sich aus der Datenbank allein darüber in Verbindung mit den zugehörigen Zeitstempeldaten nicht nur die kompletten Einstellparameter der Streckblasmaschine (Best-setpoint-Einstellungen), sondern auch die zugehörigen Onlinemessdaten zu diesen Behältnissen als perfektes Regelziel wieder in die Messeinheit und in die Regelung übertragen.

Bei einem weiteren bevorzugten Verfahren wird die Identifikationsinformation gemeinsam mit einem Zeitstempel in den Datenbankdaten, insbesondere die DMM(Daten Management Maschine)-Daten gespeichert bzw. geschrieben.

Bei einem weiteren bevorzugten Verfahren wird daher, wie oben erwähnt, ein Zeitpunkt erfasst, zu welchem ein bestimmtes Behältnis inspiziert und/oder aus einem Transportpfad ausgeleitet wird.

Wie oben erwähnt, enthält die Identifikationsinformation bevorzugt einen Zeitstempel bzw. ein für einen Zeitpunkt charakteristisches Merkmal. Bevorzugt wird die Identifikationsinformation mit einem Zeitstempel abgespeichert.

Bei einem bevorzugten Verfahren wird ein Modell erstell, welches Produktionsdaten (Arbeitsparameter und/oder Umgebungsdaten und/oder Messdaten) und Performancedaten verbindet. Bevorzugt wird die Behälterperformance basierend auf Produktionsdaten und dem Modell in (Echtzeit) optimiert.

Bei einem bevorzugten Verfahren werden die Produktionsdaten, bevorzugt Arbeitsparameter daher basierend auf dem Modell angepasst, um optimale Performancedaten zu erreichen.

Bei einem weiteren bevorzugten Verfahren wird die Identifikationsinformation durch einen Benutzereingriff erzeugt und/oder ist dadurch erzeugbar. Daher ist es möglich, dass nicht automatisch oder standardmäßig die Identifikationsinformation erzeugt wird, sondern lediglich, wenn der Benutzer dies wünscht.

Bevorzugt ist die Ausleitung der Behältnisse zum Zwecke der Inspektion von der herkömmlichen Ausleitung (etwa von fehlerhaften Behältnissen) separiert.

Bevorzugt ist die Identifikationsinformation kurz gehalten. So kann die Identifikationsinformation beispielsweise ein Datum und eine laufende Nummer enthalten (wobei bevorzugt die laufende Nummer jeden Tag neu startet). Daneben kann noch ein Index (a, b, c, ...) vorgesehen sein.

Sollten viele Offline-Tests erforderlich sein, können ggfs. bei Ausleitung eines Betriebszustandes mehrere Ausleitungen erforderlich werden.

Im Falle größerer (und/oder mehrerer) Ausleitungen sollte der Index (a, b, c, ...) angefügt werden.

Dies soll bevorzugt nur dann möglich sein, wenn innerhalb die Ausleitungen innerhalb von zwei Minuten erfolgen.

Bevorzugt können die ermittelten Daten sowohl in einer cloudbasierten Datenbank als auch in einer kundenseitigen und/oder lokalen Datenbank speicherbar.

Bei einem weiteren bevorzugten Verfahren ist die Behandlungseinrichtung aus einer Gruppe von Behandlungseinrichtungen ausgewählt, welche Erwärmungseinrichtungen zum Erwärmen von Kunststoffvorformlingen, Umformungseinrichtungen zum Umformen von Kunststoffvorformlingen zu Kunststoffbehältnissen, Etikettiereinrichtungen zum Etikettieren von Behältnissen, Fülleinrichtungen zum Befüllen von Behältnissen, Druckeinrichtungen zum Bedrucken von Behältnissen und Verschließeinrichtungen zum Verschließen von Behältnissen enthält.

Bei einem weiteren bevorzugten Verfahren ist die Behandlung der Behältnisse aus einer Gruppe von Behandlungsvorgängen ausgewählt, welche eine Erwärmung von Kunststoffbehältnissen, ein Umformen von Kunststoffvorformlingen zu Kunststoffbehältnissen, ein Etikettieren von Behältnissen, ein Befüllen von Behältnissen, ein Bedrucken von Behältnissen und ein Verschließen von Behältnissen enthält.

Bei einem weiteren bevorzugten Verfahren ist die charakteristische Größe aus einer Gruppe von Größen ausgewählt, welche eine Wandungsdicke des Behältnisses, optische Eigenschaften des Behältnisses, Eigenschaften eines an dem Behältnis angeordneten Etiketts, Eigenschaften eines an dem Behältnis angeordneten Aufdrucks und dergleichen enthält.

Bevorzugt handelt es sich bei der charakteristischen Größe um eine Eigenschaft, die mittels Inspektion ermittelbar ist, und welche Rückschlüsse auf die Behandlung bzw. den Behandlungsvorgang ermöglicht.

Bei einem bevorzugten Verfahren ist der Arbeitsparameter aus einer Gruppe von Arbeitsparametern ausgewählt, welche einen Druck, mit dem ein Kunststoffvorformling beaufschlagt wird, die Bewegung einer Reckstange, mit welcher der Kunststoffvorformling gedehnt wird, Zeitpunkte und/oder Zeiträume einer Druckbeaufschlagung der Kunststoffvorformlinge und dergleichen enthält.

Insbesondere ist es dabei möglich, diese Arbeitsparameter für eine Vielzahl von Umformungsstationen individuell einzustellen.

Derartige Arbeitsparameter können jedoch auch bei anderen Maschinen vorgenommen werden, beispielsweise bei einer Etikettiermaschine die Temperatur eines Leims, mit welchem ein Etikett aufgebracht wird oder bei einer Verschließmaschine ein Drehmoment, mit dem ein Verschluss aufgeschraubt wird und dergleichen.

Die vorliegende Erfindung ist weiterhin auf eine Vorrichtung zum Behandeln von Behältnissen gerichtet, welche eine Transporteinrichtung aufweist, welche die Behältnisse entlang eines vorgegebenen Transportpfads transportiert und eine erste Behandlungseinrichtung, welche die Behältnisse in einer vorgegebenen Weise behandelt, wobei die erste Behandlungseinrichtung zu der Behandlung des Behältnisses oder der Behältnisse vorgegebene Arbeitsparameter verwendet.

Weiterhin ist eine nach der ersten Behandlungseinrichtung angeordnete Ausleiteinrichtung, vorgesehen, um einzelne der von der Behandlungseinrichtungen behandelten Behältnisse aus dem Transportpfad auszuleiten vorgesehen und/oder eine nach der ersten Behandlungseinrichtung angeordnete Inspektionseinrichtung zum Inspizieren von von der ersten Behandlungseinrichtung behandelten Behältnisse.

Erfindungsgemäß weist die Vorrichtung eine Informationserzeugungseinrichtung zum Erzeugen wenigstens einer Identifikationsinformation auf, mittels derer das Behältnis und die für eine Performance dieser Behältnisse charakteristische Größe eindeutig identifizierbar und miteinander in Verbindung bringbar sind. Bevorzugt ist mittels der Identifikationsinformation ein zu inspizierendes Behältnis und/oder ein Inspektionsvorgang eindeutig identifizierbar.

Es wird daher auch vorrichtungsseitig vorgeschlagen, dass eine Identifikation eines Behältnisses oder aber eines Ausleitvorgangs oder dergleichen vorgenommen wird. Damit können auch hier später bestimmte Behältnisse bestimmten Arbeitsparametern zugeordnet werden.

Bevorzugt weist die Vorrichtung eine Zuordnungseinrichtung auf, welche ein zu inspizierendes Behältnis Arbeitsparameter zuordnet, mittels denen dieses Behältnis behandelt wurde. Dies kann wie oben erwähnt, beispielsweise durch Anbringen eines Zeitstempels erfolgen.

Bevorzugt ist die Zuordnungseinrichtungen auch dazu geeignet und bestimmt, einem inspizierten Behältnis oder einem zu inspizierenden Behältnis eine Behandlungsstation zuzuordnen, welche dieses Behältnis behandelt hat.

Bei einer bevorzugten Ausführungsform sind die Arbeitsparameter basierend auf einem Modell anpassbar, um optimale Performancedaten zu erreichen.

Im Zusammenhang mit der vorliegenden Anmeldung wird unter der Behandlungseinrichtungen eine gesamte Einrichtung verstanden, welche jedoch mehrere Behandlungsstationen aufweisen kann. Im Falle einer Umformungsmaschine handelt es sich bei der Behandlungseinrichtung um die gesamte Umformungsvorrichtung, die jedoch eine Vielzahl von Umformungsstationen aufweist, welche jeweils zum Umformen von Kunststoffvorformlingen zu Kunststoffbehältnissen geeignet und bestimmt sind.

Bei einem weiteren bevorzugten Verfahren weist die Vorrichtung zusätzlich, insbesondere zusätzlich zu einer Ausleiteinrichtung eine Inspektionseinrichtung auf, welche die behandelten Behältnisse nach ihrer Behandlung inspiziert, wobei diese weitere Inspektionseinrichtung, insbesondere eine Onlineinspektionseinrichtung ist. Bevorzugt ist dabei wenigstens eine für eine Qualität dieser Behältnisse charakteristische Größe bestimmbar.

Besonders bevorzugt weist die hier beschriebene Umformungseinrichtung einen drehbaren Träger auf, an dem eine Vielzahl von Umformungsstationen angeordnet ist. Bevorzugt weist jede dieser Umformungsstationen eine Blasform auf, innerhalb derer die Kunststoffvorformlinge zu den Kunststoffbehältnissen umformbar sind. Weiterhin weist bevorzugt jede Umformungsstationen eine Reckeinheit auf, welche dazu geeignet und bestimmt ist, die Kunststoffvorformlinge in ihrer Längsrichtung, zu dehnen.

Bevorzugt weist auch jede Umformungsstation eine Ventilanordnung wie insbesondere aber nicht ausschließlich einen Ventilblock auf, der eine Vielzahl von Ventilen aufweist, insbesondere um die Kunststoffvorformlinge mit unterschiedlichen Druckniveaus zu beaufschlagen.

Besonders bevorzugt weist die Umformungseinrichtung wenigstens ein und bevorzugt mehrere, insbesondere mindestens drei Druckreservoirs auf, welche dazu geeignet und bestimmt sind, die Kunststoffvorformlinge mit unterschiedlichen Druckniveaus zu beaufschlagen. Bevorzugt sind diese Druckreservoirs auf dem oder an dem beweglichen Träger angeordnet.

Bevorzugt ist der Behandlungseinrichtung entlang des Transportpfads der Behältnisse noch eine weitere Behandlungseinrichtung nachgeordnet, welche die Behältnisse in einer weiteren jedoch unterschiedlichen Weise behandelt.

Die Erfindung macht sich daher den Umstand zunutze, dass beispielsweise Rezeptparameter und Onlinemessdaten wie etwa Wanddicken ohnehin kontinuierlich gespeichert werden. Mit einer exakten Zeitzuordnung lassen sich die gewünschten Werte beispielsweise aus einer Datenbank nachträglich rekonstruieren.

Bei einer weiteren bevorzugten Ausführungsform weist die Vorrichtung eine Markierungseinrichtung auf, welche an den Behältnissen, insbesondere an den ausgeleiteten oder auszugleichenden Behältnissen eine Markierung anbringt. Auf diese Weise lässt sich später eine Zuordnung erstellen. Dabei kann diese Markierung beispielsweise auch auf Arbeitsparameter hinweisen, mit welchen dieses Behältnis erzeugt wurde.

Weitere Vorteile und Ausführungsformen ergeben sich aus den beigefügten Zeichnungen:
Dabei zeigen:
- Fig. 1: eine Darstellung einer Erfindungsgemäßen Anlage zum Herstellen von Behältnissen; und
- Fig. 2: eine Darstellung eines erfindungsgemäßen Verfahrens.

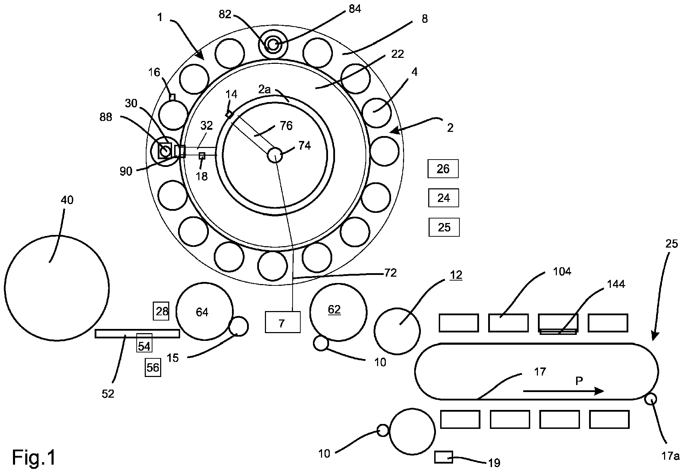

Fig. 1 zeigt eine Vorrichtung 1 zum Umformen von Kunststoffvorformlingen 10 zu Kunststoffbehältnissen 15. In diesem Falle ist dies auch die Behandlungseinrichtung zum Behandeln von Behältnissen. Diese Vorrichtung 1 weist einen drehbaren Träger 22 auf, an dem eine Vielzahl von Umformungsstationen 4 angeordnet ist. Diese einzelnen Umformungsstationen weisen jeweils Blasformeinrichtungen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Daneben wäre es auch denkbar, dass die Blasdüse an der Blasformeinrichtung abdichtet. Bevorzugt ist diese Beaufschlagungseinrichtung in einer Längsrichtung und bevorzugt ausschließlich in einer Längsrichtung der Kunststoffvorformlinge bewegbar.

Das Bezugszeichen 90 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern. Bevorzugt weist jede Umformungsstation einen derartigen Ventilblock auf.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der Zwischenblasdruck Pi. Nach der Expansion der Kunststoffbehältnisse werden bevorzugt die Drücke bzw. die Druckluft wieder von dem Behältnis in die einzelnen Druckreservoirs zurückgeführt. Bevorzugt wird noch eine weitere Druckstufe, insbesondere ein weiterer Zwischenblasdruck vorgesehen.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Diese Reckstange ist bevorzugt Bestandteil einer mit 30 bezeichneten Reckeinrichtung. Die Reckstange ist (bevorzugt ebenfalls ausschließlich) in der Längsrichtung der Kunststoffvorformlinge 10 beweglich.

Bevorzugt liegt die Anzahl dieser Umformungsstationen 4 zwischen 2 und 100, bevorzugt zwischen 4 und 60, bevorzugt zwischen 6 und 40.

Die Kunststoffvorformlinge 10 werden über eine erste Transporteinrichtung 62 wie insbesondere aber nicht ausschließlich einen Transportstern der Vorrichtung, d.h. der Behandlungseinrichtung zugeführt. Über eine zweite Transporteinrichtung 64 werden die Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an ein Druckluftreservoir 2a angegeben, bei dem es sich bevorzugt um einen Ringkanal handelt. Damit dient bevorzugt dieser Drehverteiler zu dem Zweck, Luft von einem stationären Teil der Vorrichtung in einen sich drehenden Teil der Vorrichtung zu führen.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. Das Bezugszeichen 32 kennzeichnet eine Verbindungsleitung, welche die Druckluft an eine Umformungsstation 4 bzw. deren Ventilblock 90 abgibt. Bevorzugt ist jeder der Ringkanäle über entsprechende Verbindungsleitungen mit sämtlichen Umformungsstationen verbunden. Diese Verbindungsleitung ist bevorzugt in dem drehenden Teil der Vorrichtung angeordnet.

Das Bezugszeichen 8 kennzeichnet schematisch einen optionalen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger 22 drehbar ist, außerhalb des Reinraums 8 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Weiterhin weist die Vorrichtung eine (in Fig. 1 nicht gezeigte) Deckeleinrichtung auf, welche den Reinraum 8 nach oben hin begrenzt. Diese Deckeleinrichtung ist dabei bevorzugt an wenigstens einer der Reckeinrichtungen 30 angeordnet.

Die Vorrichtung weist eine Vielzahl von Mess- und/oder Sensoreinrichtungen auf, welche zur Steuerung der Vorrichtung dienen. Das Bezugszeichen 14 kennzeichnet eine Druckmesseinrichtung, welche einen Luftdruck innerhalb des Druckluftreservoirs 2a misst. Bevorzugt weisen auch die übrigen Druckluftreservoirs entsprechende Druckmesseinrichtungen auf.

Das Bezugszeichen 16 kennzeichnet eine weitere Druckmesseinrichtung, welche einen Luftdruck insbesondere einen Behältnisinnendruck des zu expandierenden Kunststoffvorformlings misst. Bevorzugt ist jeder Umformungsstation eine solche Druckmesseinrichtung zugeordnet.

Das Bezugszeichen 18 kennzeichnet ebenfalls schematisch eine Durchflussmesseinrichtung, welche einen Durch der Blasluft von einem Druckluftreservoir zu dem Ventilblock 90 einer Umformungsstation 4 bestimmt. Bevorzugt sind entsprechende Durchflussmesseinrichtungen jeweils zwischen einem Druckluftreservoir und allen Umformungsstationen angeordnet.

Auch zwischen den weiteren Druckluftreservoirs und den jeweiligen Umformungsstationen können weitere Durchflussmesseinrichtungen zugeordnet sein.

Weiterhin sind bevorzugt auch Positionserfassungseinrichtungen vorgesehen, welche Positionen der Reckstangen der einzelnen Umformungsstationen erfassen können.

Das Bezugszeichen 24 kennzeichnet eine Steuerungseinrichtung, welche die Vorrichtung 1 steuert und insbesondere regelt. Diese Steuerungseinrichtung ist dabei bevorzugt auch in der Lage, Arbeitsparameter der Vorrichtung zu ändern.

Bevorzugt geben die oben genannten Mess- bzw. Sensoreinrichtungen kontinuierlich Sensor bzw. Messdaten auf, die besonders bevorzugt gespeichert werden. Auf Basis auch dieser Mess- bzw. Sensordaten kann beispielsweise eine KI ideale Arbeitsparameter zum Betrieb der Behandlungseinrichtung 1 ermitteln

So steuert die Steuerungseinrichtung insbesondere die einzelnen Ventile und damit die Beaufschlagung der Kunststoffvorformlinge mit den einzelnen Druckniveaus. Daneben steuert die Steuerungseinrichtung bevorzugt auch eine Bewegung der Reckstangen der einzelnen Umformungsstationen. Bevorzugt steuert die Steuerungseinrichtung auch Bewegungen der Beaufschlagungseinrichtungen d.h. der Blasdüsen. Die Steuerungseinrichtung ist daher bevorzugt dazu geeignet, die Zeitpunkte, zu denen die Beaufschlagungseinrichtungen an die Kunststoffvorformlinge angelegt werden und/oder die Zeitpunkte, zu denen die Blasformeinrichtungen wieder von den Kunststoffvorformlingen abgehoben werden zu steuern und insbesondere auch, diese Zeitpunkte zu verändern.

Das Bezugszeichen 26 kennzeichnet eine Speichereinrichtung, in der insbesondere Messgrößen erfasst werden, insbesondere Druckwerte und Durchflusswerte, aber auch entsprechende Arbeitsparameter. Bevorzugt werden diese jeweiligen Werte mit einer zeitlichen Zuordnung gespeichert.

Bevorzugt können diese Werte kontinuierlich und insbesondere über lange Zeiträume eines Maschinenbetriebs gespeichert. Die Steuerungseinrichtung steuert bzw. regelt auch unter Berücksichtigung dieser aufgenommenen Messwerte die Vorrichtung.

Das Bezugszeichen 28 kennzeichnet grob schematisch eine Inspektionseinrichtung zum Inspizieren der gefertigten Behältnisse. Bevorzugt ist auch eine Zuordnungseinrichtung vorgesehen, welche dazu geeignet und bestimmt ist, einem bestimmten inspizierten Behältnis diejenigen Arbeitsparameter zuzuordnen, welche zur Herstellung dieses Behältnisses verwendet wurden

Das Bezugszeichen 25 kennzeichnet eine Anzeigeeinrichtung, welche zur Ausgabe von Informationen an einen Maschinenbediener dient. Mittels dieser Anzeigeeinrichtung können etwa gemessene Druck(verlaufs)kurven ausgegeben werden.

Das Bezugszeichen 52 kennzeichnet eine Transporteinrichtung, mittels derer geblasene Kunststoffbehältnisse zu einer Fülleinrichtung 40 transportiert werden. Diese Fülleinrichtung stellt damit eine weitere Behandlungseinrichtung dar.

Das Bezugszeichen 54 kennzeichnet eine Ausleiteinrichtung, welche dazu dient, von der Umformungseinrichtung hergestellten Behältnisse zum Zwecke ihrer Inspektion auszuleiten. Das Bezugszeichen 56 kennzeichnet eine Erzeugungseinrichtung zum Erzeugen einer Identifikationsinformation.

Dabei kann diese Erzeugungseinrichtung beispielsweise eine Identifikationsinformation in Form einer Markierung an dem zu inspizierenden bzw. auszuleitenden Behältnis anbringen. Er wäre jedoch auch denkbar, dass die Erzeugungseinrichtung eine Identifikationsinformation erzeugt, welche beispielsweise einen genauen Zeitpunkt einer Ausleitung enthält und welche in einer Speichereinrichtung abgespeichert wird.

Auf Basis dieser Identifikation kann ein ausgeleitetes Behältnis und/oder wenigstens eine Information, die mit diesem Behältnis verknüpft ist, wie etwa ein Zeitpunkt von dessen Ausleitung gespeichert werden.

Auf Basis dieser Identifikationsinformation kenn beispielsweise auch ermittelt werden, von welcher Umformungsstation 4 und/oder mit welchen Arbeitsparametern dieses ausgeleitete Behältnis behandelt wurde. Auch kann ermittelt werden, welche Umgebungsbedingungen zum Zeitpunkt der Ausleitung bestanden haben.

Gegebenenfalls können unter Verwendung dieser Identifikationsinformation und insbesondere eines Zeitpunkts auch weitere Behältnisse identifiziert werden, welche mit der gleichen Umformungsstation in dem gleichen Zeitraum umgeformt wurden. Auf diese Weise können dem Behältnis auch Werte zugeordnet werden, welche mit der Inspektionseinrichtung solchen Behältnissen erfasst wurden.

Das Bezugszeichen 25 kennzeichnet eine Erwärmungseinrichtung, welche die von der Umformungseinrichtung umzuformenden Kunststoffvorformlinge erwärmt. Diese Erwärmungseinrichtung weist eine Transporteinrichtung 17 auf, welche die zu erwärmenden Kunststoffvorformlinge während ihrer Erwärmung transportiert. An dieser Transporteinrichtung ist eine Vielzahl von Halteeinrichtungen zum Halten der Kunststoffvorformlinge 10 angeordnet.

Das Bezugszeichen 19 kennzeichnet eine Sperreinrichtung, welche den Einlauf von Kunststoffvorformlingen in die Erwärmungseinrichtung sperren kann.

Entlang des Transportpfads der zu erwärmenden Kunststoffvorformlinge ist eine Vielzahl von (bevorzugt stationären) Heizeinrichtungen 104 angeordnet welche jeweils eine Vielzahl von Infrarotstrahlern 144 aufweisen. Das Bezugszeichen 12 kennzeichnet eine Transporteinrichtung, welche die erwärmten Kunststoffvorformlinge von der Erwärmungseinrichtung 25 weitertransportiert.

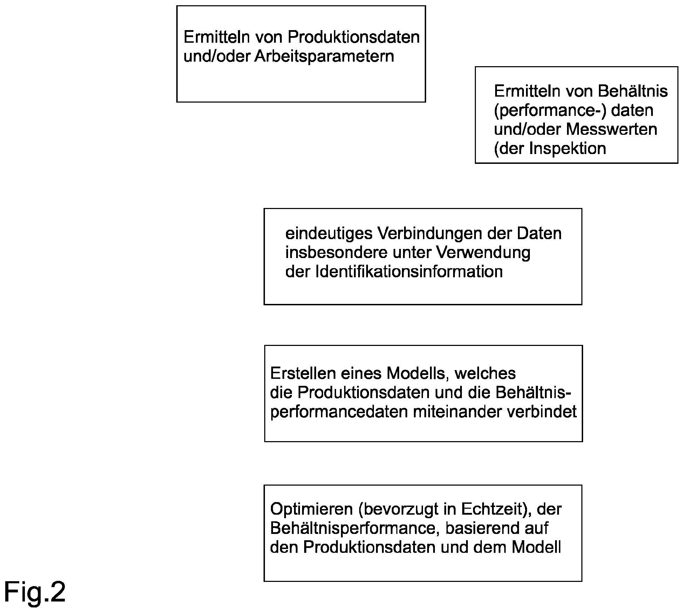

Fig. 2 zeigt einen grobschematischen Ablauf eines erfindungsgemäßen Verfahrens. Dabei werden, insbesondere im laufenden Betrieb Produktionsdaten bzw. Arbeitsparameter ermittelt. Diese werden bevorzugt permanent und/oder kontinuierlich ermittelt.

Weiterhin werden an bestimmten inspizierten Behältnissen Behältnisperformancedaten bzw. die oben erwähnten Messwerte bestimmt wie etwa eine Wanddicke.

Diese Arbeitsparameter und die Behältnisperformancedaten werden einander zugeordnet und insbesondere eindeutig miteinander verbunden. Hierzu dient insbesondere die oben erwähnte Identifikationsinformation.

Weiterhin wird bevorzugt auf Basis einer Vielzahl derartiger miteinander verbundener Daten ein Modell erstellt, welches insbesondere den Behandlungsvorgang beschreibt. Dieses Modell berücksichtigt insbesondere auch die einander zugeordneten Daten.

Das Modell kann beispielsweise beschreiben, wie sich bestimmte Arbeitsparameter auf die behandelten Behältnisse auswirken.

Bevorzugt wird die Behältnisperformance auf Basis der Arbeitsparameter und dem Modell optimiert, was insbesondere auch im Laufenden Betrieb und/oder in Echtzeit erfolgen kann.

Die Anmelderin behält sich vor sämtliche in den Anmeldungsunterlagen offenbarten Merkmale als Erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Behandeln von Behältnissen, wobei die Behältnisse mittels einer Transporteinrichtung (2) entlang eines vorgegebenen Transportpfads transportiert werden und von einer ersten Behandlungseinrichtung in einer vorgegebenen Weise behandelt werden, wobei zu der Behandlung des Behältnisses vorgegebene Arbeitsparameter (P1, P2, P3) verwendet werden, wobei einzelne Behältnisse nach ihrer Behandlung inspiziert werden und wenigstens eine für eine Performance dieser Behältnisses charakteristische Größe bestimmt wird,
**dadurch gekennzeichnet, dass**
mittels einer Identifikationsinformation das Behältnis und die für eine Performance dieser Behältnisse charakteristische Größe eindeutig identifiziert werden und miteinander in Verbindung gebracht werden.

2. Verfahren nach Anspruch 1,
**dadurch gekennzeichnet, dass**
dem inspizierten Behältnis und/oder der für die Performance charakteristischen Größe insbesondere mittels der Identifikationsinformation die Arbeitsparameter und/oder die Umgebungsdaten und/oder Messdaten zugeordnet werden, mittels denen dieses Behältnis behandelt wurde.

3. Verfahren nach wenigstens einem der vorangegangenen Ansprüche,
**dadurch gekennzeichnet, dass**
an einem zu inspizierenden Behältnis eine Markierung angebracht wird.

4. Verfahren nach wenigstens einem der vorangegangenen Ansprüche,
**dadurch gekennzeichnet, dass**
die zu inspizierenden Behältnisse aus einem Transportpfad der Behältnisse ausgeleitet werden.

5. Verfahren nach wenigstens einem der vorangegangenen Ansprüche,
**dadurch gekennzeichnet, dass**
ein Zeitpunkt erfasst wird, zu welchem ein bestimmtes Behältnis inspiziert und/oder aus einem Transportpfad ausgeleitet wird.

6. Verfahren nach wenigstens einem der vorangegangenen Ansprüche,
**dadurch gekennzeichnet, dass**
die Identifikationsinformation einen Zeitstempel enthält und/oder die Identifikationsinformation, bevorzugt mit einem Zeitstemple, abgespeichert wird.

7. Verfahren nach wenigstens einem der vorangegangenen Ansprüche,
**dadurch gekennzeichnet, dass**
ein Modell erstellt wird, welches Produktionsdaten (Arbeitsparameter und/oder Umgebungsdaten und/oder Messdaten) und Performancedaten verbindet.

8. Verfahren nach Anspruch 7,
**dadurch gekennzeichnet, dass**
die Arbeitsparameter basierend auf dem Modell angepasst, um optimale Performancedaten zu erreichen.

9. Verfahren nach wenigstens einem der vorangegangenen Ansprüche,
**dadurch gekennzeichnet, dass**
eine Vielzahl von Behältnissen inspiziert wird und aus den bei diesen Inspektionen ermittelten Messwerten ein Modell zur Steuerung der Behandlungseinrichtung abgeleitet wird.

10. Verfahren nach wenigstens einem der vorangegangenen Ansprüche,
**dadurch gekennzeichnet, dass**
die Behandlungseinrichtung aus einer Gruppe von Behandlungseinrichtungen ausgewählt ist, welche Erwärmungseinrichtungen zum Erwärmen von Kunststoffvorformlingen, Umformungseinrichtungen zum Umformen von Kunststoffvorformlingen zu Kunststoffbehältnissen, Etikettiereinrichtungen zum Etikettieren von Behältnissen, Fülleinrichtungen zum Befüllen von Behältnissen, Druckeinrichtungen zum Bedrucken von Behältnissen und Verschließeinrichtungen zum Verschließen von Behältnissen enthält und/oder die Behandlung der Behältnisse aus einer Gruppe von Behandlungsvorgängen ausgewählt ist, welche einer Erwärmung von Kunststoffbehältnissen, ein Umformen von Kunststoffvorformlingen zu Kunststoffbehältnissen, ein Etikettieren von Behältnissen, ein Befüllen von Behältnissen, ein Bedrucken von Behältnissen und ein Verschließen von Behältnissen enthält.

11. Verfahren nach wenigstens einem der vorangegangenen Ansprüche,
**dadurch gekennzeichnet, dass**
es sich bei den Produktionsdaten um Arbeitsparameter und/oder, Störgrößer oder Umgebungsparameter und/oder Messdaten handelt.

12. Verfahren nach wenigstens einem der vorangegangenen Ansprüche,
**dadurch gekennzeichnet, dass**
es sich bei den Performancedaten um Messdaten handelt, welche nicht oder nur schwer inline und in Echtzeit aufgenommen werden können.

13. Vorrichtung (1) zum Behandeln von Behältnissen, mit einer Transporteinrichtung (2), welche die Behältnisse entlang eines vorgegebenen Transportpfads transportiert und einer ersten Behandlungseinrichtung, welche die Behältnisse (10) in einer vorgegebenen Weise behandelt, wobei die erste Behandlungseinrichtung zu der Behandlung der Behältnisses vorgegebene Arbeitsparameter (P1, P2, P3) verwendet, und mit einer nach der ersten Behandlungseinrichtung angeordneten Ausleiteinrichtung um einzelne der von der Behandlungseinrichtung behandelten Behältnisse aus dem Transportpfad auszuleiten und/oder einer nach der ersten Behandlungseinrichtung angeordneten Inspektionseinrichtung zum Inspizieren der von der ersten Behandlungseinrichtung behandelten Behältnisse
**dadurch gekennzeichnet, dass**
die Vorrichtung eine Informationserzeugungseinrichtung (56) zum Erzeugen wenigstens einer Identifikationsinformation aufweist, mittels derer das Behältnis und die für eine Performance dieser Behältnisse charakteristische Größe eindeutig identifizierbar und miteinander in Verbindung bringbar sind.

14. Vorrichtung (1) nach Anspruch 13,
**dadurch gekennzeichnet, dass**
die Vorrichtung eine Zuordnungseinrichtung aufweist, welche einem zu inspizierenden Behältnis und/oder der für die Performance charakteristischen Größe Arbeitsparameter zuordnet, mittels denen dieses Behältnis behandelt wurde.

15. Vorrichtung nach wenigstens einem der vorangegangenen Ansprüche,
**dadurch gekennzeichnet, dass**
die Arbeitsparameter basierend auf einem Modell anpassbar sind, um optimale Performancedaten zu erreichen.
